# EUROPÄISCHE PATENTANMELDUNG

(11) **EP 1 653 012 A2**
(43) Veröffentlichungstag der Anmeldung: **03.05.2006**
(21) Anmeldenummer: 05023798.1
(22) Anmeldetag: 31.10.2005
(51) Int. Cl.: E03B 3/03, E03F 1/00

(54) **Versickerungsanlage**

(30) Priorität: 30.10.2004 DE 202004016819 U
(71) Anmelder: WISY AG Haustechniksysteme, Filtertechnik, 63699 Kefenrod (DE)
(72) Erfinder: Winkler, Norbert, 63699 Kefenrod (DE)
(74) Vertreter: Hebing, Norbert

(57) **Zusammenfassung**

In der Regel ist der Überlauf einer Zisterne mit einem Versickerungsschacht (2) verbunden, der überlaufendes Wasser aus der Zisterne (20) aufnimmt, so dass es durch den offenen Boden des Schachtes (2) langsam in den Erdreich versickern kann.

Bei starkem und lang andauerndem Regen wird auch der Versickerungschacht (2) vollständig gefüllt, was zu einer Verdichtung des Erdreiches unterhalb des Schachtes (2) führt, wodurch die Versickerungsrate drastisch verkleinert wird.

Um dies zu verhindern, schlägt die Erfindung vor, dass der Schacht (2) eine Pumpe (10) aufweist, deren Saugstutzen am Schachtboden (5) angeordnet ist, dass ein Füllstandssensor vorgesehen ist, der bei einem vorbestimmten maximalen Füllstand anspricht, und dass eine Pumpensteuerung vorhanden ist, die die Pumpe (10) beim Überschreiten des maximalen Füllstandes aufgrund eines entsprechenden Schaltsignales des Füllstandssensors einschaltet und wenigstens so lange in Betrieb hält, bis der Schacht (2) bis auf eine Restfüllmenge leer gepumpt ist.

## Beschreibung

Die Erfindung bezieht sich auf eine Versickerungsanlage mit einem im Erdboden eingelassenen Schacht, der einen offenen oder wenigstens wasserdurchlässigen Boden aufweist und mit einem Wasserzulauf versehen ist.

Derartige Versickerungsanlagen werden häufig Regenwasserzisternen nachgeschaltet. Überschüssiges Wasser wird über den Wasserzulauf dem Schacht zugeführt, wodurch ein Überlaufen der Zisterne verhindert wird. In dem Schacht kann das Wasser nach und nach durch den Boden in das darunter liegende Erdreich versickern.

Bei eng aufeinander folgenden Regenschauern kann es vorkommen, dass die Vesickerungsanlage für lange Zeit mit Wasser gefüllt ist, weil, bevor das Wasser eines Regenschauers vollständig versickert ist, eine neue Befüllung mit dem Wasser des nächsten Regenschauers erfolgt. Dadurch entsteht am Boden des Schachtes Staunässe, die den Boden verdichtet, was das weitere Versickern von Wasser erschwert und außerdem zu Vermoderungen führt, was mit unangenehmen Gerüchen verbunden ist.

Die Erfindung beruht somit auf dem Problem, eine Versickerungsanlage zu schaffen, die auch bei starkem Wasseranfall funktionstüchtig bleibt.

Zur Lösung des Problems wird vorgesehen, dass der Schacht eine Pumpe aufweist, deren Saugstutzen am Schachtboden angeordnet ist, dass ein Füllstandssensor vorgesehen ist, der bei einem vorbestimmten maximalen Füllstand anspricht, und dass eine Pumpensteuerung vorhanden ist, die die Pumpe beim Überschreiten des maximalen Füllstandes aufgrund eines entsprechenden Schaltsignales des Füllstandssensors einschaltet und wenigstens so lange in Betrieb hält, bis der Schacht bis auf eine Restfüllmenge leer gepumpt ist.

Mit einer solchen Anordnung wird somit erreicht, dass, insbesondere im Frühjahr, wenn die Zisterne gefüllt ist und es häufig zu Regenschauern kommt, die Versickerungsanlage auch in einer lang andauernden Regenperiode in gewissen Zeitabständen austrocknen kann, so dass die Bodenporen wieder Luft nachziehen können. Dadurch wird Staunässe vermieden und der Boden bleibt weiter biologisch aktiv und bereit zur weiteren Wasseraufnahme.

Unter einer Restfüllmenge soll eine geringe Menge verstanden werden, die rasch versickert, so dass der Boden alsbald trocken liegt. Optimal ist ein vollständiges Leerpumpen, also wenn die Restfüllmenge zu Null wird.

Damit die Pumpe bei einem minimalen Füllstand ausschaltet, kann entweder der Füllstandssensor so eingerichtet werden, dass er aufgrund eines dem minimalen Füllstand entsprechenden Schaltsignals die Pumpe wieder ausschaltet, oder es kann eine Zeitschaltuhr eingesetzt werden, die nach einem gewissen Zeitraum die Pumpe ausschaltet, wobei der Zeitraum wenigstens ausreicht, die dem maximalen Füllstand entsprechende Wassermenge abzupumpen.

Wie schon erwähnt, kann eine solche Versickerungsanlage vorzugsweise mit einer Regenwasserzisterne gekoppelt werden.

Für den Wassereintritt besitzt der Schacht ein quer verlaufendes Rohr, das an seiner Unterseite einen Wasseraustritt hat, wobei unterhalb des Wasseraustrittes ein Sieb angeordnet ist. Dieses Sieb kann als Korb ausgeführt werden und am Rohr hängend befestigt sein, wobei der maximale Füllstand unterhalb des Siebes liegt. Mittels des Siebes werden insbesondere organische Materialien ausgefiltert, die sich sonst am Boden ablegen, dort vermodern und eine Sperrschicht bilden würden.

Als Pumpe kann eine Tauchpumpe vorgesehen werden, die am Boden des Schachtes aufsitzt und mit einem Schwimmerschalter versehen ist.

Diese Pumpe ist mit einem außerhalb des Schachtes frei verlegbaren Schlauch verbunden. Dieser sollte nach einem Abpumpvorgang jeweils versetzt werden, so dass das aus dem Schacht ausgepumpte Wasser jeweils an einer anderen Stelle außerhalb des Schachtes versickern kann.

Außerdem bezieht sich die Erfindung auf ein entsprechendes Verfahren zum Betreiben einer Versicherungsanlage.

Die Erfindung wird im Folgenden anhand eines Ausführungsbeispiels näher erläutert. Die Ausführung ist in zwei Figuren dargestellt, diese zeigen in
- Fig. 1: eine geschnittene, perspektivische Darstellung eines Schachtes einer Versickerungsanlage;
- Fig. 2: eine Versickerungsanlage in Kombination mit einer Wasserzisterne.

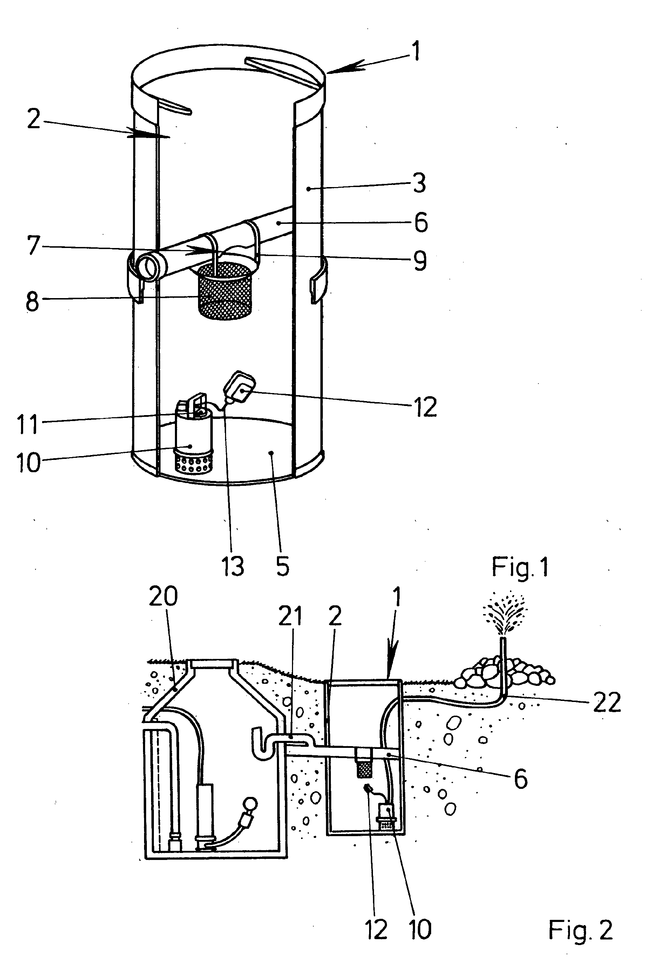

Gemäß Fig. 1 besteht die Versickerungsanlage 1 aus einem im Erdboden eingesetzten Schacht 2, wobei die Wände des Schachtes von einer Verschalung 3 gestützt werden.

Der Boden 5 des Schachtes 2 ist offen oder porös. Auf halber Höhe verläuft quer durch den Schacht 2 ein Rohr 6 mit einer Öffnung 7 an der Unterseite. Unterhalb der Öffnung 7 befindet sich ein korbförmiges Sieb 8, das von Haken 9 am Rohr 6 gehalten ist. Am Boden 5 des Schachtes 2 befindet sich eine Tauchpumpe 10 mit einem Schalter 11, der von einem Schwimmer 12 betätigt wird. Der Schalter 11 und der Schwimmer 12 bilden zusammen einen Füllstandssensor. Der Schwimmer 12 ist an einem starren Arm 13 befestigt, wobei dessen Länge den Abstand zwischen dem maximalen und dem minimalen Füllstand bestimmt.

Figur 2 zeigt eine Gesamtanordnung bestehend aus einer Zisterne 20 und der Versickerungsanlage 1. An der Zisterne 20 befindet sich ein Überlauf 21, der mit dem Rohr 6 verbunden ist.

Wenn der Wasserstand in der Zisterne 20 den Überlauf 21 erreicht, fließt das überschüssige Wasser über das Rohr 6 in den Schacht und füllt diesen bis zu einem maximalen Füllstand. Wenn dieser erreicht ist, wird die Tauchpumpe 10 eingeschaltet, so dass das in dem Schacht vorhandene Wasser nahezu vollständig über einen frei verlegbaren Schlauch 22 abgepumpt wird, wobei das Wasser in der Umgebung des Schachtes 2 im Erdreich versickert. Da der Schlauch 22 frei verlegbar ist, kann dieser Versickerungsbereich gewechselt werden.

Die Pumpe 10 fördert so lange, bis der Schacht 2 nahezu trocken liegt. Dies ermöglicht es, dass sich das Erdreich unter dem Boden 5 erholt und sich keine Staunässe bildet.

### Bezugszeichenliste

- 1: Versickerungsanlage
- 2: Schacht
- 3: Verschalung

- 5: Boden
- 6: Rohr
- 7: Öffnung
- 8: Sieb
- 9: Haken

- 10: Tauchpumpe
- 11: Schalter
- 12: Schwimmer
- 13: Arm

- 20: Zisterne
- 21: Überlauf
- 22: Schlauch

## Patentansprüche

1. Versickerungsanlage mit einem im Erdboden eingelassenen Schacht, der einen offenen oder wenigstens wasserdurchlässigen Boden aufweist, und mit einem Wasserzulauf, **dadurch gekennzeichnet, dass** der Schacht (2) eine Pumpe (10) aufweist, deren Saugstutzen am Schachtboden (5) angeordnet ist, dass ein Füllstandssensor vorgesehen ist, der bei einem vorbestimmten maximalen Füllstand anspricht, und dass eine Pumpensteuerung vorhanden ist, die die Pumpe (10) beim Überschreiten des maximalen Füllstandes aufgrund eines entsprechenden Schaltsignales des Füllstandssensors einschaltet und wenigstens so lange in Betrieb hält, bis der Schacht (2) bis auf eine Restfüllmenge leer gepumpt ist.

2. Versickerungsanlage nach Anspruch 1, **dadurch gekennzeichnet, dass** der Füllstandssensor außerdem auf einen der Restfüllmenge entsprechenden minimalen Füllstand anspricht und dass die Pumpensteuerung so eingerichtet ist, dass auf Grund eines entsprechenden Schaltsignals des Füllstandssensors die Pumpe (10) ausgeschaltet wird.

3. Versickerungsanlage nach Anspruch 1, **dadurch gekennzeichnet, dass** die Pumpensteuerung eine Zeitschaltuhr aufweist.

4. Versickerungsanlage nach Anspruch 1, **dadurch gekennzeichnet, dass** sie mit einer einen Überlauf (21) aufweisenden Regenwasserzisterne (20) verbunden ist, wobei das über den Überlauf (21) abfließende Wasser in den Schacht (2) der Versickerungsanlage (1) geleitet wird.

5. Versickerungsanlage nach Anspruch 4, **dadurch gekennzeichnet, dass** quer durch den Schacht (2) ein Rohr (6) geführt ist, das an seiner Unterseite einen Wasseraustritt hat, und dass unterhalb des Wasseraustritts ein Sieb (8) angeordnet ist.

6. Versickerungsanlage nach Anspruch 5, **dadurch gekennzeichnet, dass** das Sieb (8) korbförmig ausgeführt ist und am Rohr (6) hängend befestigt ist, wobei der maximale Füllstand unterhalb des Siebes (8) liegt.

7. Versickerungsanlage nach einem der vorhergehenden Ansprüche, **dadurch gekennzeichnet, dass** die Pumpe (10) eine Tauchpumpe ist, an der ein Schwimmerschalter (11) befestigt ist.

8. Versickerungsanlage nach einem der vorhergehenden Ansprüche, **dadurch gekennzeichnet, dass** der Auslass der Pumpe (10) mit einem außerhalb des Schachtes (2) frei verlegbaren Schlauch (22) verbunden ist.

9. Verfahren zum Betreiben einer Versickerungsanlage mit einem im Erdboden eingelassenen Schacht, der einen offenen oder wenigstens wasserdurchlässigen Boden aufweist, und mit einem Wasserzulauf, wobei der Schacht (2) eine Pumpe (10) aufweist, deren Saugstutzen am Schachtboden (5) angeordnet ist, und wobei ein Füllstandssensor vorgesehen ist, der bei einem vorbestimmten maximalen Füllstand anspricht, **dadurch gekennzeichnet, dass** die Pumpe (10) beim Überschreiten des maximalen Füllstandes aufgrund eines entsprechenden Schaltsignales des Füllstandssensors einschaltet wird und wenigstens so lange in Betrieb gehalten wird, bis der Schacht (2) bis auf eine Restfüllmenge leer gepumpt ist.
